# EUROPÄISCHE PATENTSCHRIFT

(11) **EP 3 127 937 B1**
(45) Veröffentlichungstag und Bekanntmachung des Hinweises auf die Patenterteilung: **07.03.2018**
(21) Anmeldenummer: 15180004.2
(22) Anmeldetag: 06.08.2015
(51) Int. Cl.: C08G 69/04, C08L 77/02

(54) **FLAMMGESCHÜTZTE POLYAMID 12 FORMMASSEN FÜR BAHNANWENDUNGEN**
FLAME RESISTANT POLYAMIDE 12 SUBSTANCES FOR RAIL APPLICATIONS
MASSES DE FORMAGE EN POLYAMIDE 12 IGNIFUGE POUR APPLICATIONS FERROVIAIRES

(43) Veröffentlichungstag der Anmeldung: 08.02.2017
(73) Patentinhaber: EMS-PATENT AG, 7013 Domat / Ems (CH)
(72) Erfinder: Bayer, Andreas, 7013 Domat / Ems (CH); Stöppelmann, Georg, 7402 Bonaduz (CH)
(74) Vertreter: Bremi, Tobias Hans

(56) Entgegenhaltungen:
- EP-A1- 1 498 448
- EP-A1- 1 762 592
- WO-A1-02/28953
- WO-A1-2005/035664

## Beschreibung

### TECHNISCHES GEBIET

Die vorliegende Erfindung betrifft unverstärkte flammgeschützte Polyamid 12 Formmassen mit Weichmacher für Bahnanwendungen, insbesondere auf Basis von Mischungen aus PA 12 und PA 12 basierten Elastomeren. Zudem betrifft die Erfindung Herstellungsverfahren für solche Polyamid-Formmassen und Verwendungen davon.

### STAND DER TECHNIK

Flammgeschützte Polyamid-Formmassen sind aus dem Stand der Technik an sich bekannt. So ist beispielsweise aus der DE-A-10 2005 041 966 eine halogenfrei flammgeschützte Polyamid-Formmasse auf Basis von Polyamid 66 bekannt, welche eine hohe Flammwidrigkeit und eine hohe Glühdrahtbeständigkeit aufweisen soll. Es handelt sich dabei aber nicht um Polyamid-Formmassen für die Herstellung von flexiblen Bauteilen, sondern um faserverstärkte Polyamid-Formmassen.

Aus der EP-A-1 670 862 ist ebenfalls eine flammgeschützte Polyamid-Formmasse bekannt, die neben aliphatischem Polyamid wenigstens teilweise auf teilaromatischen Polyamiden aufbaut, und die zur Herstellung von Formkörpern, insbesondere von Bauteilen für die Elektro- und Elektronikindustrie vorgesehen sind. Auch hier sind Faserverstärkungen zwingend, denn es handelt sich nicht um eine Polyamid-Formmasse für die Herstellung von flexiblen Bauteilen, und die aliphatische Polyamidbasis ist Polyamid 6 oder Polyamid 66.

Aus der WO-A-02/28953 ist eine halogen-freie Flammschutzformulierung bekannt sowie damit ausgerüstete Polyamid-Formmassen; auch diese Formmassen sind zur Herstellung von steifen Formkörpern, insbesondere von Bauteilen für die Elektro- und Elektronikindustrie vorgesehen. Entsprechend werden auch nur Formmassen mit Glasfaserverstärkung gearbeitet, und das Erreichen einer hohen Steifigkeit wird herausgestrichen. Gearbeitet werden nur Formmassen auf Basis von Polyamid 6.

Aus der WO-A-2010/061128 sind halogenfrei flammgeschützte Polyamid-Formmassen auf Basis von Polyamid 66, Polyamid 6 oder Polyamid 6/66 bekannt, die mit funktionalisiertem Polyolefin versetzt sind, und die eine Faserverstärkung enthalten können oder nicht. Es wird jedoch eine spezielle Kombination aus zwei unterschiedlichen Polyolefinen verwendet, die benötigte Flammschutzmenge ist hoch und die gearbeiteten Beispiele sind ebenfalls zur Herstellung von steifen Formkörpern vorgesehen.

Aus der EP-A-2 410 020 sind unverstärkte, halogenfrei flammgeschützte Polyamid-Formmassen und deren Verwendungen zur Herstellung von elektrischen und/oder elektronischen Bauteilen bekannt, wobei insbesondere auf die Eignung für Lötprozesse Wert gelegt wird. Als Polyamid-Basis werden dabei ausschliesslich teilaromatische Polyamide gearbeitet auf Basis von Terephthalsäure.

### DARSTELLUNG DER ERFINDUNG

Es ist damit unter anderem Aufgabe der vorliegenden Erfindung, eine neue, insbesondere unverstärkte Polyamid-Formmasse zur Verfügung zu stellen, die eine hohe Flexibilität aufweist, halogenfrei flammgeschützt ist und insbesondere durch Extrusions- oder Extrusionsblasverfahren verarbeitbar ist.

Diese Aufgabe wird gelöst durch die in den Ansprüchen definierte Formmasse, das in den Ansprüchen definierte Herstellungsverfahren für die Formmasse, und die Bauteile aus einer solchen Formmasse sowie die Verwendungen der Formmasse wie in den Ansprüchen angegeben.

Die Erfindung schlägt damit eine unverstärkte, flammgeschützte Polyamidformmasse auf Basis von Polyamid PA12 und gegebenenfalls Polyamid-Elastomeren vor, die ebenfalls auf Polyamid PA12 beruhen (Hartsegmente).

Damit wird eine Formmasse insbesondere für Bahnanwendungen zur Verfügung gestellt, z.B. nach EN 45545. Danach werden im Rahmen von strengen Anforderungen v.a. LOI und geringe Rauchgaswerte gefordert.

Für Bahnanwendungen wird gerne PA12 wegen der guten mechanischen Eigenschaften und der geringen Rauchgaswerte eingesetzt. Stand der Technik sind PA12/Melamincyanurat-Compounds. Diese sind jedoch aus folgenden Gründen limitiert:
- Hochviskoses PA12 führt zum Schäumen wegen Zersetzung des Flammschutzes
- Stickstoffhaltiges Flammschutzmittel kann potentiell HCN und NO-Werte erhöhen.
- Melamincyanurat liefert keinen ausreichenden Flammschutz in Kombination mit Additiven, die für flexible Formmassen notwendig sind.

Aus diesem Grund wird nach der Erfindung ein phosphorhaltiges Flammschutzmittel verwendet. Eines der möglichen Produkte, namentlich Exolit OP1230, ist in erster Linie nur für faserverstärkte Produkte und bevorzugt für teilaromatische Polymere (z.B. PA, PES) als Flammschutz bekannt. Die Mehrzahl der bekannten Patentdokumente schreibt Verstärkungsfasern zwingend vor bzw. wenn im Anspruch offen formuliert, werden nur Beispiele mit GF und Flammschutzmengen gearbeitet, die in unverstärkten Formmassen keine ausreichende Wirkung zeigen.

Überraschend wurde festgestellt, dass halogenfreie Flammschutzmittel auf Basis von Metallphosphinaten auch für unverstärkte, flexible PA12-Formmassen (enthalten Weichmacher und gegebenenfalls SZM oder ein PA-Elastomer) mit Vorteil eingesetzt werden können. Insbesondere für die flexibilisierten PA12 können die Nachteile der Verwendung von Melamincyanurat als Flammschutz besonders gut überwunden werden.

Die vorgeschlagenen Formmassen zeichnen sich insbesondere durch einen LOI > 28% (bevorzugt >30, insbesondere bevorzugt >32), einen E-Modul < 1000 MPa (d.h. eine gewisse Flexibilität muss vorhanden sein), eine Bruchdehnung > 100% und einen ausreichenden Kerbschlag von bevorzugt ≥ 10 kJ/m² (insbesondere bevorzugt von ≥ 15 kJ/m²) aus.

Konkret betrifft die vorliegende Erfindung eine Polyamid-Formmasse bestehend aus:
(A) 50-90 Gew.-% einer Polyamidmatrix bestehend aus:
   (A1) 15 - 100 Gew.-% Polyamid 12;
   (A2) 0 - 85 Gew.-% Polyamid-Elastomer auf Basis von Polyamid 12;
   wobei die Summe von (A1) und (A2) 100 Gewichtsprozent der Komponente (A) ergibt;
(B) 7-28 Gew.-% Flammschutzmittel, bestehend aus:
   (B1) 60 - 100 Gew.-% wenigstens eines Metallphosphinats;
   (B2) 0 - 40 Gew.-% wenigstens eines stickstoffhaltigen Synergisten und/oder wenigstens eines Stickstoff und Phosphor enthaltenden Flammschutzmittels;
   wobei die Summe von (B1) - (B2) 100 Gewichtsprozent der Komponente (B) ergibt;
(C) 3-15 Gew.-% Weichmacher;
(D) 0-15 Gew.-% Polyolefin;
(E) 0-10 Gew.-% Additive und/oder partikuläre Füllstoffe.

Dabei ist die Summe aus (C) und (D) 3 bis 20 Gew.-% bezogen auf die gesamte Formmasse, und die Summe (A) bis (E) ergibt 100 Gew.-%. Mit anderen Worten ist die oben angegebene Formulierung geschlossen zu verstehen, es gibt keinen Raum für andere Bestandteile in der Polyamid-Formmasse neben den genannten Komponenten (A)-(E). Generell ist es erfindungsgemäss, wenn die Polyamid-Formmasse frei von Verstärkungsfasern ist.

Weiterhin ist es bevorzugt, wenn es innerhalb der Polyamid-Formmasse keine Anteile an aromatischem und/oder teilaromatischen Polyamid gibt.

Was die Mengenangaben angeht, ist hervorzuheben, dass die Unterkomponenten (A1)-(A2) respektive (B1)-(B2) sich in den Mengenangaben jeweils nicht auf die gesamte Polyamid-Formmasse beziehen, sondern die dort angegebenen Mengenangaben beziehen sich jeweils auf 100 % der jeweiligen Komponente, d.h. die Summe der Mengenangaben von (A1) und (A2) ergibt 100 % (A), und die Summe der Komponenten (B1)-(B2) ergibt 100 % (B).

Soweit in der Folge bevorzugte Mengen für Komponenten angegeben werden, so sind die angegebenen engeren Bereiche jeweils so zu verstehen, dass in jedem Fall in Bezug auf die Polyamid-Formmasse die Summe der Komponenten (A)-(E) nicht mehr als 100 Gewichtsprozent ausmacht, dass die Summe der Komponenten (A1) und (A2) nicht mehr als 100 Gewichtsprozent der Komponente (A) ausmacht, und die Summe der Komponenten (B1)-(B2) nicht mehr als 100 Gewichtsprozent der Komponente (B) ausmacht.

**Komponente (A):** Die Polyamidmatrix der Komponente (A) besteht entweder aus Polyamid 12 allein (nur A1) oder aus einer Mischung aus Polyamid 12 (A1) mit einem Polyamid-Elastomer (A2) auf Basis von Polyamid 12, wobei dann der Anteil an der Komponente (A2) nicht mehr als 85 Gewichtsprozent, bezogen auf die gesamte Komponente (A) ausmacht.

Gemäss einer bevorzugten Ausführungsform besteht die Polyamidmatrix (A) aus: (A1) 20-100 Gew.-% Polyamid 12 und (A2) 0-80 Gew.-% Polyamid-Elastomer auf Basis von Polyamid 12.

Gemäss einer weiteren bevorzugten Ausführungsform besteht die Polyamidmatrix (A) aus (A1) 50-100 Gew.-% Polyamid 12 und (A2) 0-50 Gew.-% Polyamid-Elastomer auf Basis von Polyamid 12.

Gemäss einer besonders bevorzugten Ausführungsform besteht die Polyamidmatrix (A) aus (A1) 80-95 Gew.-% Polyamid 12 und (A2) 5-20 Gew.-% Polyamid-Elastomer auf Basis von Polyamid 12.

Vorzugsweise liegt der Anteil an Komponente (A2) im Bereich von 8-12 Gew.-% Polyamid-Elastomer auf Basis von Polyamid 12.

Dabei ergibt die Summe von (A1) und (A2) stets 100 Gewichtsprozent der Komponente (A).

Was die **Komponente (A1)** angeht, so handelt es sich dabei vorzugsweise um ein Polyamid 12 mit einer Lösungsviskosität bestimmt nach DIN EN ISO 307 im Bereich von ηᵣₑₗ = 1.5-2.8, vorzugsweise im Bereich von ηᵣₑₗ = 1.5-2.3 ist (jeweils gemessen bei 20 °C an einer Lösung von 0.5 g Polymer gelöst in 100 ml m-Kresol).

Besonders bevorzugt werden als Komponente (A1) Typen von Polyamid 12 mit einer mittleren Lösungsviskosität im Bereich von ηᵣₑₗ = 1.8-2.1, oder insbesondere im Bereich von ηᵣₑₗ = 1.9 bis 2.0, da diese Typen hinsichtlich Verarbeitbarkeit Vorteile aufweisen. Vorteilhaft werden auch Mischungen von PA12-Typen mit unterschiedlicher Lösungsviskosität eingesetzt, wobei dann aber alle Mischungsbestandteile Lösungsviskositäten in den angegebenen Bereichen aufweisen.

Vorteilhafterweise haben die erfindungsgemässen Formmassen eine Schmelzviskosität (MVR, melt volume-flow rate), bestimmt nach ISO 1133 bei 275°C und mit einer Auflage von 5 kg, im Bereich von 3 - 120 cm³/10min, insbesondere im Bereich 5 - 100 cm³/10min, ganz besonders bevorzugt im Bereich von 10 - 60 cm³/10min.

Typischerweise verfügt das Polyamid 12 über einen Schmelzpunkt im Bereich von 175-185 °C.

Was die Polyamid-Elastomer **Komponente (A2)** angeht, so handelt es sich dabei vorzugsweise um ein Polyamid-Elastomer aufgebaut aus Hartsegmenten auf Basis von Polyamid 12 (vorzugsweise nur aus solchen Hartsegmenten) und Weichsegmenten auf Basis von, vorzugsweise ausschliesslich, Polyetherdiol, Dimerdiol (auf Basis dimerisierter Fettsäuren mit 20-44 C-Atomen) und/oder Polyetherdiamin.

Dieses Polyetherdiol des Weichsegments ist vorzugsweise aufgebaut auf Basis von, vorzugsweise ausschliesslich, wenigstens einem C2-C5 (bevorzugt C2-C4) Polyoxyalkylen Baustein, insbesondere vorzugsweise ausgewählt aus folgender Gruppe: Ethylenoxid, Propylenoxid, Tetrahydrofuran oder eine Mischung davon.

Die erfindungsgemässen Dimerdiole mit 20-44 C-Atomen, bevorzugt mit 24 bis 36 C-Atomen, sind vorzugsweise aliphatische oder cycloaliphatische Diole, hergestellt durch Dimerisierung von ungesättigten Fettsäuren und anschliessender Hydrierung. Besonders bevorzugt wird das C36-Dimerdiol (CAS-Nr. 147853-32-5) und das C44-Dimerdiol.

Alternativ oder zusätzlich kann das Polyetherdiamin Weichsegment bevorzugt aufgebaut sein auf Basis von, vorzugsweise ausschliesslich, wenigstens einem C2-C5 (bevorzugt C2-C4) Polyoxyalkylen Baustein, insbesondere vorzugsweise ausgewählt aus folgender Gruppe: Ethylenoxid, Propylenoxid, Tetrahydrofuran, oder eine Mischung davon.

Gemäss einer bevorzugten Ausführungsform verfügen die Polyamid 12-Hartsegmente über eine zahlenmittlere Molmasse im Bereich von 500 bis 10000 g/mol, bevorzugt auf 700 bis 5000 g/mol und besonders bevorzugt auf 750 bis 3000 g/mol.

Auf der anderen Seite verfügen bevorzugtermassen die Weichsegmente über eine zahlenmittlere Molmasse im Bereich vom 200 - 4000 g/mol, bevorzugt im Bereich vom 200 - 3000 g/mol, besonders bevorzugt von 300-2500 g/mol.

Gemäss einer bevorzugten Ausführungsform liegt der Anteil Polyamid 12 Hartsegment im Bereich von 45-95 Gew.%, vorzugsweise 50 - 80 Gew.%, und der Anteil Weichsegmente im Bereich von 5 - 55 Gew.-%, vorzugsweise 20-50 Gew.-%, jeweils bezogen auf 100% der Komponente (A2).

Eine besonders bevorzugte Ausführungsform der Komponente (A2) ist dadurch gekennzeichnet, dass sie frei ist von Esterbindungen.

Das Polyamid-Elastomer verfügt gemäss einer weiteren Ausführungsform mindestens über eine amorphe Phase, welche bevorzugtermassen von der Weichsegment-Einheit, dem Etheranteil, herrührt. Die Glasübergangstemperatur respektive der Glasübergangspunkt dieser amorphen Phase beträgt gemäss einer bevorzugten Ausführungsform höchstens 20°C. Diese amorphe Phase der Polyetheramide verfügt bevorzugtermassen über einen Glasübergangspunkt von weniger als 0°C, bevorzugt von weniger als -20°C. Bevorzugt liegt der Glasübergangspunkt des Weichsegments im Bereich von -70°C bis 0°C, insbesondere bevorzugt im Bereich von -60°C bis -20°C, jeweils bestimmt mittels DSC-Messung gemäss ISO 11357-2.

Die Herstellung der Polyamid-Elastomere erfolgt vorzugsweise in einem ein- oder zweistufigen Polykondensationsverfahren. Im einstufigen Verfahren werden die Polyamid bildenden Komponenten zusammen mit dem Dimerdiol und/oder der Polyether-Komponente in möglichst equimolarem Verhältnis der Endgruppen der Einzelkomponenten gemischt und bei Temperaturen im Bereich von 180 bis 300°C bis zum Erreichen der gewünschten Viskosität polykondensiert. Wird ein gezielter blockweiser Aufbau angestrebt kommt mit Vorteil das zweistufige Verfahren zum Einsatz. Hierbei werden in einer ersten Stufe zunächst die mit Carboxy- oder Amino-Endgruppen versehenen Polyamid-Einheiten aus bei Temperaturen von 180 bis 320°C und bei Drücken von 0 bis 20 bar gebildet, die dann nachfolgend mit den Weichsegment-Einheiten unter Atmosphärendruck oder reduziertem Druck (Vakuum) bei Temperaturen im Bereich von 180 bis 280°C zum hochmolekularen Copolymeren polykondensiert werden. Werden Weichsegment-Einheiten mit Hydroxyl-Endgruppen eingesetzt, werden mit Vorteil Veresterungskatalysatoren, wie z.B. organische Titanate oder Zirkonate, zur Reaktionsbeschleunigung eingesetzt.

Die erfindungsgemässen Polyamid-Elastomere weisen bevorzugtermassen einen Zug-E-Modul von höchstens 1200 MPa, bevorzugt von höchstens 1000 MPa und besonders bevorzugt von höchstens 700 MPa auf. Damit besitzen die Polyamid-Elastomere bevorzugt Steifigkeiten im Zug-E-Modul-Bereich von 50 bis 1000 MPa und besonders bevorzugt im Bereich von 80 bis 700 MPa.

**Komponente (B):** Die Flammschutz-Komponente (B) liegt in der Polyamid-Formmasse in einem Anteil von 7-28 Gew.-% vor. Es kann sich dabei ausschliesslich um ein Flammschutzmittel bestehend aus Metallphosphinat (B1) handeln (oder eine Mischung derartiger Systeme), es können aber auch bis zu 40 Gew.-% (B2) wenigstens eines stickstoffhaltigen Synergisten und/oder wenigstens eines Stickstoff und Phosphor enthaltenden Flammschutzmittels beigemischt sein. Die Prozentangaben sind jeweils bezogen auf 100 Gewichtsprozent der Komponente (B), d.h. die Summe von (B1) - (B2) ergibt immer 100 Gewichtsprozent der Komponente (B).

Die Polyamid-Formmasse ist gemäss einer bevorzugten Ausführungsform dadurch gekennzeichnet, dass der Anteil der Komponente (B) innerhalb der Formmasse im Bereich von 10-25 Gew.-%, vorzugsweise im Bereich von 10 - 17 Gew.-% liegt.

Hinsichtlich Zusammensetzung der Komponente (B) ist weiterhin bevorzugt, dass die Komponente (B) aufgebaut ist aus 70 - 100 Gew.-% (B1), 0 - 30 Gew.-% (B2), vorzugsweise 80 - 100 Gew.-% (B1), 0 - 20 Gew.-% (B2), insbesondere vorzugsweise 79.5 - 95.5 Gew.-% (B1), 4.5 - 20.5 Gew.-% (B2), wobei die Summe von (B1) und (B2) jeweils 100 Gewichtsprozent der Komponente (B) ergibt. In einer weiteren bevorzugten Ausführungsform besteht Komponente (B) ausschliesslich aus der Komponente (B1), so dass die Komponente (B2) nicht in der Formmasse enthalten ist.

Vorzugsweise ist das wenigstens eine Metallphosphinat der Komponente (B1) ausgewählt als Phosphinsäuresalz und/oder Diphosphinsäuresalz, wobei es sich vorzugsweise um ein Phosphinsäuresalz der allgemeinen Formel (I) und/oder Formel (II) und/oder deren Polymere handelt 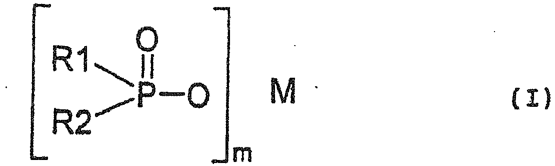 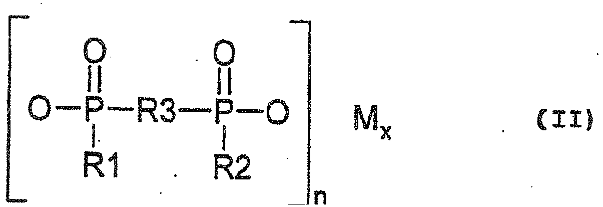 worin
- R1, R2: gleich oder verschieden sind und bevorzugt C1-C8-Alkyl, linear oder verzweigt und/oder Aryl sind;
- R3: C1-C10-Alkylen, linear oder verzweigt, C6-C10-Arylen, -Alkylarylen oder Arylalkylen sind;
- M: ein Metallion aus der 2. oder 3. Haupt- oder Nebengruppe des Periodensystems ist; und
- m: 2 oder 3;
- n: 1 oder 3;
- x: 1 oder 2
bedeuten. Als Metallion M wird bevorzugt Al, Ca und Zn eingesetzt.

Bei Komponente (B2) handelt es sich bevorzugt um Melamin oder Kondensationsprodukte des Melamins, wie z.B. Melem, Melam, Melon, oder um Umsetzungsprodukte von Melamin mit Polyphosphorsäure oder um Umsetzungsprodukte von Kondensationsprodukten des Melamins mit Polyphosphorsäure oder Gemische davon.

Als Komponente (B2) wird insbesondere Melaminpolyphosphat bevorzugt. Derartige Flammschutzmittel sind aus dem Stand der Technik bekannt. Hierzu wird auf die DE 103 46 3261 verwiesen, diesbezüglich sei der Offenbarungsgehalt dieser Schrift ausdrücklich hierin eingeschlossen.

Hinsichtlich Flammschutz ist es besonders bevorzugt, wenn (B2) und damit die ganze Polyamid-Formmasse kein Melamincyanurat (B2) aufweist.

**Komponente (C):** In der Polyamid-Formmasse gibt es einen Anteil von 3-15 Gew.-% Weichmacher. Der Weichmacher ist dabei verschieden von den anderen Komponenten der Polyamid-Formmasse, insbesondere handelt es sich beim Weichmacher nicht um ein System des Typs (A2), (B), (D) und/oder (E). Komponente (C) ist damit ausdrücklich verschieden von Komponente (A2), (B), (D) und/oder (E). Gemäss einer bevorzugten Ausführungsform der Formmasse ist der Anteil des Weichmachers der Komponente (C) in der Formmasse im Bereich von 5-12 Gew.-%, vorzugsweise im Bereich von 5 - 10 Gew.-%.

Bevorzugtermassen ist der Weichmacher der Komponente (C) auf Basis eines Amids von Arylsulfonsäuren mit 2 bis 12 C-Atomen, Ester der p-Hydroxybenzoesäure mit 2-20 C-Atomen in der Alkoholkomponente, Phosphonaten oder Phosphaten aufgebaut, vorzugsweise besteht der Weichmacher aus einem Arylsulfonamid, d.h. innerhalb der Komponente (C) gibt es nur Arylsulfonamid-Systeme als Weichmacher.

Bevorzugte phosphorhaltige Weichmacher sind u.a. Diphenylkresylphosphat, Tris(2-ethylhexyl)phosphat, Diphenyl-2-ethylhexylphosphat, Trikresylphosphat, Alkyl- oder Arylphosphonate, Diethylphosphonat oder zyklische Phosphonate, wie z.B. Aflammit PLF 710.

Bevorzugte Ester der 4-Hydroxybenzoesäure sind p-Hydroxybenzoesäure-octylester p-Hydroxybenzoesäureethylester, p-Hydroxybenzoesäure-i-hexadecylester, p-Hydroxybenzoesäure- 2-hexyldecylester.

Bevorzugte Vertreter der Arylsulfonsäureamide sind Benzolsulfonsäureamid, Benzolsulfonsäure-N-alkylamide, wobei die Alkylreste insgesamt 1 bis 20 C-Atome tragen, vorzugsweise Benzolsulfonsäure-N-butylamid, Benzolsulfonsäure-N-octylamid, Benzolsulfonsäure-N-ethylhexylamid, Benzolsulfonsäure-N-cyclohexylamid, Toluolsulfonsäureamid, Toluolsulfonsäure-N-alkylamide, wobei die Alkylgruppen 1 bis 20 C-Atome enthalten, vorzugsweise Toluolsulfonsäure-N-ethylamid und Toluolsulfonsäure-N-butylamid.

Bevorzugtermassen enthält die Komponente (C) wenigstens einen der folgenden Weichmacher, bevorzugtermassen besteht die Komponente aus wenigstens einem der folgenden Weichmacher: p-Hydroxybenzoesäure-octylester, p-Hydroxybenzoesäureethylester, p-Hydroxybenzoesäure-i-hexadecylester, p-Hydroxybenzoesäure-2-hexyldecylester, Benzolsulfonsäureamid, Benzolsulfonsäure-N-alkylamide, wobei die Alkylreste insgesamt 1 bis 20 C-Atome tragen, vorzugsweise Benzolsulfonsäure-N-butylamid, Benzolsulfonsäure-N-octylamid, Benzolsulfonsäure-N-ethylhexylamid, Benzolsulfonsäure-N-(2-hydroxypropyl)amid, Benzolsulfonsäure-N-cyclohexylamid, o-Toluolsulfonsäureamid, p-Toluolsulfonsäureamid o- oder p-Toluolsulfonsäure-N-alkylamide, wobei die Alkylgruppen 1 bis 20 C-Atome enthalten, vorzugsweise o-Toluolsulfonsäure-N-ethylamid, p-Toluolsulfonsäure-N-ethylamid, o-Toluolsulfonsäure-N-butylamid und p-Toluolsulfonsäure-N-butylamid. Die genannten Systeme können einzeln oder in Mischungen eingesetzt werden. Besonders bevorzugt ist eine Mischung aus Benzolsulfonsäure-N-alkylamid und p-Toluolsulfonsäureamid.

Ganz besonders bevorzugt ist die ausschliessliche Verwendung von N-Butylbenzolsulfonamid als Komponente (C).

**Komponente (D):** In der Polyamid-Formmasse kann es optional einen Anteil von bis zu 15 Gew.-% Polyolefin geben. Bevorzugtermassen liegt der Anteil der Komponente (D) in der Formmasse im Bereich von 0-12 Gew.-%, vorzugsweise im Bereich von 4 - 10 Gew.-%.

Gemäss einer bevorzugten Ausführungsform ist dieses Polyolefin der Komponente (D) auf Basis wenigstens eines oder einer Kombination folgender Bausteine, vorzugsweise als Copolymer, insbesondere vorzugsweise als Terpolymer, aufgebaut: Ethylen, Propylen, Butylen, Acrylat, Methacrylat, Acrylsäure, Methacrylsäure, Maleinsäureanhydrid, Glycidyl-Methacrylat, Dien, insbesondere Butadien und/oder Isopren. Insbesondere bevorzugt ist es als Ethylen-Propylen und Ethylen-Butylen Copolymer aufgebaut, dass mit Maleinsäureanhydrid gepfropft ist. Und/oder es ist als Ethylen-Methacrylsäure-Acrylat-Terpolymer aufgebaut, dass mit Metallionen neutralisiert ist, insbesondere bevorzugt mit Zinkionen.

Gemäss einer anderen bevorzugten Ausführungsform ist das wenigstens eine Polyolefin der Komponente (D) ausgewählt aus folgender Gruppe: Ethylen-Propylen-Kautschuk (EPM, EPR), Ethylen-Propylen-Dien-Kautschuk (EPDM), styrolhaltiges Elastomer, insbesondere SEBS, SBS, SEPS, Acrylatkautschuk, Nitril-Kautschuke (NBR, H-NBR), Siliconkautschuk.

Gemäss einer weiteren bevorzugten Ausführungsform hinsichtlich Komponente (D) ist das wenigstens eine Polyolefin funktionalisiert, vorzugsweise mit Maleinsäureanhydrid und/oder Glycidyl-Methacrylat. Dabei liegt der Pfropfgrad bevorzugtermassen im Bereich von 0.05-10 %.

Weiterhin bevorzugt handelt es sich bei Komponente (D) um ein Polyolefin-Ionomeres, vorzugsweise auf Basis eines ganz oder teilweise mit Zink-Ionen neutraliserten Ethylen/Methacrylsäure Copolymers.

**Komponente (E):** Wie oben dargestellt kann die Polyamid-Formmasse im Rahmen von Komponente (E) bis zu 10 Gew.-% Additive, partikuläre Füllstoffe, oder beides, enthalten. Auch hier ist hervorzuheben, dass die Additive der Komponente (E) verschieden sind von den anderen Komponenten (A)-(D).

Vorzugsweise liegt der Anteil der Komponente (E) in der Formmasse im Bereich von 0-8 Gew.-%, insbesondere vorzugsweise im Bereich von 1 - 5 Gew.-%.

Besonders bevorzugt hinsichtlich Komponente (E) ist die Situation, bei der es keine partikulären Füllstoffe gibt, d.h. die Situation, bei der die Polyamid-Formmasse frei von partikulären Füllstoffen ist.

Bei den Additiven handelt es sich vorzugsweise um Stabilisatoren wie UV-Stabilisatoren, Hitzestabilisatoren, Radikalfänger und/oder um Verarbeitungshilfsstoffe, sauerstoff-, stickstoff- oder schwefelhaltigen Metallverbindungen, weitere Polymere und/oder funktionelle Additive bevorzugt zur Beeinflussung optischer Eigenschaften wie insbesondere des Brechungsindexes oder um Kombinationen oder Mischungen davon. Des Weiteren können die Formmassen partikuläre Füllstoffe beispielsweise nanoskalige Füll- und/oder Funktionsstoffe, wie zum Beispiel Schichtmineralien oder Metalloxide, die den Brechungsindex erhöhen, oder photochrome Farbstoffe beinhalten. Ebenfalls möglich sind Glaskugeln, Russ, Graphit, Mineral wie zum Beispiel Calciumcarbonat oder Bariumsulfat, oder andere Polymere.

Bevorzugte sauerstoff-, stickstoff- oder schwefelhaltige Metallverbindungen innerhalb der Komponente (E) beruhen vornehmlich auf den Metallen Aluminium, Calcium, Magnesium und Zink. Geeignete Verbindungen sind ausgewählt aus der Gruppe der Oxide, Hydroxide, Carbonate, Silikate, Borate, Phosphate, Stannate sowie Kombinationen oder Mischungen dieser Verbindungen, wie z.B. Oxid-Hydroxide oder Oxid-Hydroxid-Carbonate. Beispiele sind Magnesiumoxid, Calciumoxid, Aluminiumoxid, Zinkoxid, Magnesiumhyroxid, Aluminiumhydroxid, Böhmit, Dihydrotalcit, Hydrocalumit, Calciumhydroxid, Zinnoxidhydrat, Zinkhydroxid, Zinkborat, Zinksulfid, Zinkphosphat, Calciumcarbonat, Calciumphosphat, Magnesiumcarbonat, basisches Zinksilikat, Zinkstannat, Bariumstearat, Calciumstearat, Zinkstearat, Magnesiumstearat, Kaliumpalmitat, Magnesiumbehenat.

Eine besonders bevorzugte Ausführungsform der vorgeschlagenen Polyamid-Formmasse ist dadurch gekennzeichnet, dass sie wie folgt zusammengesetzt ist:
(A) 60-79 Gew.-% einer Polyamidmatrix bestehend aus:
   (A1) 80 - 92 Gew.-% Polyamid 12;
   (A2) 8 - 20 Gew.-% Polyamid-Elastomer aus Polyamid 12 Hartsegmenten und Weichsegmenten auf Basis von, vorzugsweise ausschliesslich, Polyetherdiol aus wenigstens einem Baustein ausgewählt aus folgender Gruppe: Ethylenoxid, Propylenoxid, Tetrahydrofuran; wobei das Polyamid-Elastomer bevorzugt frei von Esterbindungen ist;
   wobei die Summe von (A1) und (A2) 100 Gewichtsprozent der Komponente (A) ergibt;
(B) 8-25 Gew.-% Flammschutzmittel, bestehend aus wenigstens einem Metallphosphinat ausgewählt als Phosphinsäuresalz und/oder Diphosphinsäuresalz;
(C) 5-10 Gew.-% Weichmacher ausgewählt als N-Butylbenzolsulfonamid;
(D) 8-12 Gew.-% Polyolefin ausgewählt als Copolymer, aufgebaut aus wenigstens einem oder einer Kombination folgender Bausteine: Ethylen, Propylen, Butylen, Acrylat, Methacrylat, Acrylsäure, Methacrylsäure vorzugsweise funktionalisiert mit Maleinsäureanhydrid und/oder als Polyolefin-Ionomeres;
(E) 0-5 Gew.-% Additive unter Ausschluss von partikulären Füllstoffen; wobei die Summe aus (C) und (D) 13 bis 20 Gew.-% bezogen auf die gesamte Formmasse ist, und
wobei die Summe (A) bis (E) 100 Gew.-% ergibt.

Weiterhin betrifft die vorliegende Erfindung ein Verfahren zur Herstellung einer Polyamid-Formmasse, wie sie oben dargestellt wurde, welches Verfahren vorzugsweise dadurch gekennzeichnet ist, dass die Komponenten aus (A) separat zu den Komponenten aus (B) vorgemischt werden und getrennt in den Einzug eines Compounders zudosiert werden. Alternativ kann (B) auch über einen Sidefeeder in die Schmelze von (A) dosiert werden. Komponente (C) wird allenfalls ebenfalls separat vorgemischt und flüssig in die aufgeschmolzene Masse der übrigen Komponenten gepumpt. Die Komponenten (D) und (E) können wahlweise (A) oder (B) zugemischt werden, wobei (A) bevorzugt ist. Bevorzugt wird die Schmelze unter Atmosphärendruck oder Vakuum entgast, um kompakteres Granulat zu erhalten.

Weiter betrifft die vorliegende Erfindung ein Granulat, Pulver oder Bauteile aus einer Polyamid-Formmasse, wie sie oben dargestellt wurde.

Insbesondere betrifft die vorliegende Erfindung flexible Bauteile, insbesondere für brandgeschützte Anwendungen im Bahnbereich, vorzugsweise als Beschichtung, Abdeckung, Folie, Profil, Rohr, Wellrohr, Hohlkörper, Dichtung, Verkleidung, Halterung, Gehäuse, Ummantelung, Elektro- und Elektronikbauteile wie vorzugsweise Stecker und Lüfter, vorzugsweise zugelassen nach DIN EN 45545.

Die Bauteile verfügen vorzugsweise über einen E-Modul von kleiner 1000 MPa und/oder über eine Bruchdehnung von grösser 100 % und/oder einen Kerbschlag von grösser oder gleich 10 kJ/m², insbesondere bevorzugt von grösser oder gleich 15 kJ/m² oder grösser oder gleich 20 kJ/m².

Zudem betrifft die vorliegende Erfindung ein Verfahren zur Herstellung eines solchen Gegenstandes. Es ist bevorzugtermassen dadurch gekennzeichnet, dass eine Polyamid-Formmasse, wie sie oben beschrieben wird, in einem Extrusions- oder Extrusionsblasverfahren, einem Spritzgussverfahren oder einem Hinterspritzen zum Gegenstand geformt wird.

Zu guter letzt betrifft die vorliegende Erfindung die Verwendung einer Polyamid-Formmasse, wie sie oben dargestellt wurde, zur Herstellung von solchen Bauteilen. Weitere Ausführungsformen sind in den abhängigen Ansprüchen angegeben.

### BESCHREIBUNG BEVORZUGTER AUSFÜHRUNGSFORMEN

Bevorzugte Ausführungsformen der Erfindung werden im Folgenden anhand der Ausführungsbeispiele beschrieben, die lediglich zur Erläuterung dienen und nicht einschränkend auszulegen sind.

### Herstellung der Polyamidformmassen:

Die Komponenten des Typs (A1), d.h. PA12 HV und/oder PA 12 TV, wurden ggf. mit den Komponenten (A2), d.h. ELG 4960 und/oder ELG 5930, der Komponente (B), d.h. OP1230, der Komponenten (C), d.h. BBSA, der Komponente (D), d.h. Tafmer und/oder Surlyn, und den Additiven der Komponente (E) in den in den folgenden Tabellen angegebenen Proportionen nach folgendem Verfahren compoundiert:
   Die Rohstoffe der Komponenten (A), (D) und (E) werden vorgemischt und gravimetrisch über eine Bandwaage in den Einzug eines Zweiwellenextruder der Fa. Werner u. Pfleiderer, Typ ZSK25 dosiert. Komponente (B) wird ggf. ebenfalls vorgemischt und über eine Schneckenförderung gravimetrisch ebenfalls in den Einzug dosiert. Der Weichmacher wird über eine Pumpe 5 Zonen vor der Düse eindosiert. Alternativ kann der Weichmacher auch mit Komponente A in einem Extruder vorgemischt werden. Der Durchsatz der Pumpe wird vorab ausgelitert, hochviskose Weichmacher können durch eine beheizbare Pumpe bei erhöhter Temperatur leichter verarbeitet werden. 2 Zonen vor der Düse wird die Schmelze bei Atmosphärendruck entgast (geöffnete Entgasungszone). Es wird bei Zylindertemperaturen von 270 - 290° C bei Schneckendrehzahl von 200 rpm und einem Durchsatz von 15 kg/h gearbeitet. Der Compound wird über eine Düse ausgetragen und nach Abkühlen des Strangs granuliert. Anschliessend wird bei 80 °C 24 h im Vakuum getrocknet.

### Herstellung der Formkörper:

Die Herstellung der Formkörper erfolgt auf einer Spritzgussmaschine Arburg Allrounder 320-210-750 mit ansteigendem Zylindertemperaturprofil 240 - 260 °C und Einspritzdrücken von 1200 - 1800 bar. Die Formtemperatur beträgt 40 °C. Die Geometrie der Formkörper entspricht den Vorgaben der entsprechenden Prüfnormen.

Die Zusammensetzungen der Formmassen und die Eigenschaften der daraus hergestellten Formkörper sind in den Tabellen 1 und 2 zusammengefasst, Vergleichsbeispiele sind in Tabelle 3 angegeben.

**Tabelle 1: Beispiele B1 - B6 nach der Erfindung:**

| | | **B1** | **B2** | **B3** | **B4** | **B5** | **B6** |
|---|---|---|---|---|---|---|---|
| PA12 HV | G-% | 74.7 | 65.7 | 51.7 | 56.7 | 55.7 | 50.7 |
| PA12 TV | G-% | | | 16 | 16 | 16 | 17 |
| BBSA | G-% | 10 | 9 | 12 | 7 | 8 | 9 |
| Tafmer MC201 | G-% | | | | | | 6 |
| Surlyn 9320 | G-% | | | 8 | 8 | 8 | |
| OP1230 | G-% | 15 | 25 | 12 | 12 | 10 | 17 |
| Stabilisator | G-% | 0.3 | 0.3 | 0.3 | 0.3 | 0.3 | 0.3 |

| Eigenschaften | | | | | | | |
|---|---|---|---|---|---|---|---|
| E-Modul | MPa | 700 | 800 | 420 | 600 | 600 | 640 |
| Bruchdehnung | % | 170 | 160 | 210 | 180 | 195 | 170 |
| Kerbschlag 23°C | kJ/m² | 20 | 16 | 34 | 17 | 18 | 35 |
| LOI | % | 30 | 40 | 35 | 32 | 30 | 31 |
| Schäumen | | - | - | - | - | - | - |
| MVR (275°C/5kg) | cm³/ 10 min | 8 | 6 | 30 | 14 | 29 | 36 |

| | | | | | | | |
|---|---|---|---|---|---|---|---|
| Legende: G-%: Gew.-% | | | | | | | |

**Tabelle 2: Beispiele B7 - B12 nach der Erfindung:**

| | | **B7** | **B8** | **B9** | **B10** | **B11** | **B12** |
|---|---|---|---|---|---|---|---|
| PA12 HV | G-% | 66.7 | 50.7 | 53.7 | 50.7 | | |
| PA12 TV | G-% | | 14 | 16 | 14 | 17 | 36.7 |
| ELG 4960 | G-% | | 10 | | 10 | | |
| ELG 5930 | G-% | | | | | 58 | 40 |
| BBSA | G-% | 10 | 5 | 8 | 7 | 3 | 3 |
| Tafmer MC201 | G-% | 4 | | | | | |
| Surlyn 9320 | G-% | | 10 | 12 | 8 | | |
| OP1230 | G-% | 19 | 10 | 8 | 10 | 25 | 20 |
| Stabilisator | G-% | 0.3 | 0.3 | 0.3 | 0.3 | 0.3 | 0.3 |

| Eigenschaften | | | | | | | |
|---|---|---|---|---|---|---|---|
| E-Modul | MPa | 630 | 550 | 440 | 450 | 750 | 940 |
| Bruchdehnung | % | 150 | 250 | 240 | 290 | 200 | 200 |
| Kerbschlag 23°C | kJ/m² | 20 | 24 | 26 | 21 | 15 | 10 |
| LOI | % | 37 | 30 | 28 | 30 | 33 | 30 |
| Schäumen | | - | - | - | - | - | - |
| MVR (275°C/5kg) | cm³/ 10 min | 9 | 25 | 21 | 39 | 55 | 45 |

| | | | | | | | |
|---|---|---|---|---|---|---|---|
| Legende: G-%: Gew.-%; HV: hochviskos; TV: tiefviskos; LOI: Limiting Oxygen Index | | | | | | | |

**Tabelle 3: Vergleichsbeispiele VB1 - B4 nach der Erfindung:**

| | | **VB1** | **VB2** | **VB3** | **VB4** |
|---|---|---|---|---|---|
| PA12 HV | G-% | | | 67 | |
| PA12 TV | G-% | 84.7 | 39.7 | 12.5 | 17 |
| ELG 5930 | G-% | | 40 | | 55 |
| BBSA | G-% | | | 6 | 3 |
| MC | G-% | | | 12.5 | 25 |
| OP1230 | G-% | 15 | 20 | | |
| Stabilisator | G-% | 0.3 | 0.3 | 0.3 | 0.3 |

| Eigenschaften | | | | | |
|---|---|---|---|---|---|
| E-Modul | MPa | 2120 | 1120 | 840 | 710 |
| Bruchdehnung | % | 50 | 200 | 210 | 190 |
| Kerbschlag 23°C | kJ/m² | 5 | 7 | 9 | 7 |
| LOI | % | 30 | 30 | 24 | 27 |
| Schäumen | | - | - | + | + |
| MVR (275°C/5kg) | cm³/ 10 min | 160 | 20 | ng | ng |

| | | | | | |
|---|---|---|---|---|---|
| Legende: G-%: Gew.-%; HV: hochviskos; TV: tiefviskos; LOI: Limiting Oxygen Index; ng: nicht gemessen | | | | | |

**Tabelle 4: Beispiele B13 bis B17 nach der Erfindung**

| | | **B13** | **B14** | **B15** | **B16** | **B17** |
|---|---|---|---|---|---|---|
| PA12 HV | G-% | 33.7 | 48.7 | | 66.7 | 58.7 |
| PA12 MV | | | | 68.2 | | |
| PA12 TV | G-% | 31 | 16 | | | 16 |
| BBSA | G-% | 6 | | 8.5 | 10 | |
| DPK | G-% | 6 | | | | |
| HDPB | G-% | | 12 | | | 7 |
| Tafmer MC201 | G-% | 8 | 8 | 6 | 4 | |
| Surlyn 9320 | G-% | | | | | 8 |
| OP1230 | G-% | 12 | 12 | 17 | 16 | 10 |
| MPP | G-% | 3 | 3 | | 2 | |
| Zinkborat | G-% | | | | 1 | |
| Stabilisator | G-% | 0.3 | 0.3 | 0.3 | 0.3 | 0.3 |

| Eigenschaften | | | | | | |
|---|---|---|---|---|---|---|
| E-Modul | MPa | 470 | 472 | 625 | 640 | 750 |
| Bruchdehnung | % | 168 | 234 | 200 | 150 | 242 |
| Kerbschlag 23°C | kJ/m² | 33 | 19 | 17 | 64 | 10 |
| LOI | % | 29 | 31 | 32 | 31 | 31 |
| Schäumen | | - | - | - | - | - |
| MVR (275°C/10 | cm³/ | 28 | 115 | 56 | 14 | 29 |
| min) | 10 min | | | | | |

Die Messungen wurden nach folgenden Normen und an folgenden Prüfkörpern im trockenen Zustand durchgeführt. D.h. die Prüfkörper werden nach dem Spritzguss mindestens 48 h bei Raumtemperatur in trockener Umgebung, über Silicagel, gelagert, bevor sie den Prüfungen zugeführt werden.

Das **thermische Verhalten** (Schmelzpunkt (T_{M}), Schmelzenthalpie (ΔH_{M}), Glasumwandlungstemperatur (T_{g})) wurde anhand der ISO-Norm 11357 (11357-2 für die Glasübergangstemperatur, 11357-3 für die Schmelztemperatur und die Schmelzenthalpie) am Granulat bestimmt. Die Differential Scanning Calorimetry (DSC) wurde mit Aufheizrate von 20 °C/min durchgeführt.

Die **relative Viskosität** (ηᵣₑₗ) wurde bestimmt nach DIN EN ISO 307 an Lösungen von 0,5 g Polymer gelöst in 100 ml m-Kresol bei einer Temperatur von 20°C. Als Probe wird Granulat verwendet.

**Zug-E-Modul, Bruchfestigkeit und Bruchdehnung:** Zug-E-Modul, Bruchfestigkeit und Bruchdehnung wurden nach ISO 527 mit einer Zuggeschwindigkeit von 1mm/min (Zug-E-Modul) bzw. mit einer Zuggeschwindigkeit von 50 mm/min (Bruchfestigkeit, Bruchdehnung) am ISO-Zugstab, Norm ISO/CD 3167, Typ Al, 170 x 20/10 x 4mm bei Temperatur 23°C bestimmt.

**Schlagzähigkeit und Kerbschlagzähigkeit** nach Charpy wurden nach ISO 179/keU bzw. ISO 179/keA am ISO-Prüfstab, Norm ISO/CD 3167, Typ B1, 80 x 10 x 4mm bei einer Temperatur von 23°C gemessen.

Der **Sauerstoffindex** (**LOI** = Limiting Oxygen Index) ist die minimale Sauerstoffkonzentration eines Sauerstoff-Stickstoff-Gemisches, bei der die Verbrennung eines vertikal angeordneten Prüfkörpers unter den Prüfbedingungen anhält. Der LOI wird gemäss ISO 4589 bestimmt.

**Schäumen:** Wird visuell an Granulaten oder Extrusionssträngen beurteilt. Dazu werden die Granulate oder Stränge mit einer scharfen Klinge quer zur Extrusionsrichtung aufgeschnitten und die Schnittfläche mittels Lupe oder Mikroskop betrachtet. Als geschäumt (in Tabellen als + gekennzeichnet) wird ein Granulat dann bewertet, wenn es auf mindestens 25% der Schnittfläche Blasen aufweist. Einige wenige Löcher (Vakuolen) oder komplett kompakte Schnittflächen werden in den Tabellen als nicht geschäumt (-) bezeichnet.

Der **MVR** (Schmelze-Volumenfließrate oder **M**elt **V**olume-flow **R**ate) wird nach ISO 1133 mittels eines Kapillarrheometers ermittelt, wobei das Material (Granulat) in einem beheizbaren Zylinder bei einer Temperatur von 275°C aufgeschmolzen und unter einem durch die Auflagelast von 5 kg entstehenden Druck durch eine definierte Düse (Kapillare) gedrückt wird. Ermittelt wird das austretende Volumen der Polymerschmelze als Funktion der Zeit.

Folgende Materialien wurden eingesetzt:
- PA12 HV:: Polyamid PA12 mit einer Lösungsviskosität von ηᵣₑₗ = 2.2 (Lösung von 0.5 g Polymer gelöst in 100 ml m-Kresol, 20°C) und einem Schmelzpunkt von 178°C, EMS-CHEMIE AG.
- PA12 MV:: Polyamid PA12 mit einer Lösungsviskosität von ηᵣₑₗ = 2.0 und einem Schmelzpunkt von 178°C, EMS-CHEMIE AG.
- PA12 TV:: Polyamid PA12 mit einer Lösungsviskosität von ηᵣₑₗ = 1.7 (Lösung von 0.5 g Polymer gelöst in 100 ml m-Kresol, 20°C) und einem Schmelzpunkt von 178°C, EMS-CHEMIE AG.
- ELG 4960:: Polyetheramid auf Basis von Polyamid PA12 und auf Basis von THF mit einer Lösungsviskosität von ηᵣₑₗ = 1.7 (0.5 Gew.-% in m-Kresol, 20°C) und einem Schmelzpunkt von 155°C, EMS-CHEMIE.
- ELG 5930:: Polyetheramid auf Basis von Polyamid PA12 und auf Basis von Propylenoxid, mit einer Lösungsviskosität von ηᵣₑₗ =1.9 (0.5 Gew.-% in m-Kresol, 20°C) und einem Schmelzpunkt von 162°C, EMS-CHEMIE.
- BBSA:: N-Butylbenzolsulfonamid
- Tafmer MC201:: Schlagzähmodifikator-Mischung aus mit Maleinsäureanhydrid gepfropften Ethylen-Propylen- und Ethylen-Butylen-Copolymeren, Mitsui.
- Exolit OP1230:: Phosphororganisches Salz (Clariant Produkte GmbH), Flammschutzmittel.
- MC:: Melamincyanurat, Melapur MC25, BASF SE
- Surlyn 9320:: Ethylen-Methacrylsäure-Acrylat-Terpolymer, teilweise neutralisiert mit Zinkionen (DuPont)
- Stabilisator:: Irganox 1098, sterisch gehindertes phenolisches Antioxidans (BASF SE)
- DPK:: Disflamoll DPK (Lanxess AG), Diphenylkresylphosphat-Weichmacher.
- HDPB:: 2-Hexyldecyl-4-hydroxybenzoate. CAS 148348-12-3
- MPP:: Melaminpolyphosphat Melapur 200 70 (BASF SE)
- Zinkborat:: Firebrake 500 (U.S. Borax Inc.)

### Resultate:

Wie in der jeweils zweitletzten Zeile der jeweiligen Tabelle dargestellt zeigt es sich, dass die erfindungsgemässen Polyamid-Formmassen bei der Verarbeitung nicht das bei den mit MC ausgerüsteten Vergleichsbeispielen 3 und 4 auftretende Schäumen zeigen.

Wie Vergleichsbeispiele 3 und 4 zeigen, wird mit MC zudem kein ausreichender LOI-Wert erreicht, wenn weitere Zuschlagstoffe der Komponenten (C) und (D) verwendet werden. Der Vergleich mit den Vergleichsbeispielen 1 und 2 ausgerüstet mit einem Halogen-freien Flammenschutz aber ohne Weichmacher zeigt auf, dass diese Systeme einen für die geplanten flexiblen Anwendungen zu hohen E-Modul aufweisen, und einen zu tiefen Kerbschlag.

Die Beispiele in Tabelle 4 zeigen, dass auch bei Variation des Weichmachers, des Schlagzähmodifiers sowie der Zusatz von Komponente B2 ebenfalls flexible Formmassen mit ausreichender Schlagzähigkeit und einem LOI von grösser 28 hergestellt werden können.

## Patentansprüche

1. Polyamid-Formmasse bestehend aus:
(A) 50-90 Gew.-% einer Polyamidmatrix bestehend aus:
(A1) 15 - 100 Gew.-% Polyamid 12;
(A2) 0 - 85 Gew.-% Polyamid-Elastomer auf Basis von Polyamid 12;
wobei die Summe von (A1) und (A2) 100 Gewichtsprozent der Komponente (A) ergibt;
(B) 7-28 Gew.-% Flammschutzmittel, bestehend aus:
(B1) 60 - 100 Gew.-% wenigstens eines Metallphosphinats;
(B2) 0 - 40 Gew.-% wenigstens eines stickstoffhaltigen Synergisten und/oder wenigstens eines Stickstoff und Phosphor enthaltenden Flammschutzmittels;
wobei die Summe von (B1) und (B2) 100 Gewichtsprozent der Komponente (B) ergibt;
(C) 3-15 Gew.-% Weichmacher;
(D) 0-15 Gew.-% Polyolefin;
(E) 0-10 Gew.-% Additive und/oder partikuläre Füllstoffe;
wobei die Komponente (E) frei von faserförmigen Verstärkungsstoffen ist,
wobei die Summe aus (C) und (D) 3 bis 20 Gew.-% bezogen auf die gesamte Formmasse ist,
und
wobei die Summe (A) bis (E) 100 Gew.-% ergibt.

2. Polyamid-Formmasse nach Anspruch 1, **dadurch gekennzeichnet, dass** die Polyamidmatrix (A) besteht aus:
(A1) 20-100 Gew.-%, vorzugsweise 50-100 Gew.-%, insbesondere vorzugsweise 80-95 Gew.-% Polyamid 12;
(A2) 0-80 Gew.-%, vorzugsweise 0-50 Gew.-%, insbesondere vorzugsweise 5-20 Gew.-% Polyamid-Elastomer auf Basis von Polyamid 12.
wobei die Summe von (A1) und (A2) 100 Gewichtsprozent der Komponente (A) ergibt.

3. Polyamid-Formmasse nach einem der vorhergehenden Ansprüche, **dadurch gekennzeichnet, dass** das Polyamid 12 der Komponente (A1) ein Polyamid 12 mit einer Lösungsviskosität im Bereich von ηᵣₑₗ = 1.5-2.8, vorzugsweise im Bereich von ηᵣₑₗ = 1.5-2.3 ist (jeweils gemessen bei 20 °C an einer Lösung von 0.5 g Polymer gelöst in 100 ml m-Kresol).

4. Polyamid-Formmasse nach einem der vorhergehenden Ansprüche, **dadurch gekennzeichnet, dass** das Polyamid-Elastomer der Komponente (A2) Hartsegmente auf Basis von Polyamid 12 aufweist, und
Weichsegmente auf Basis von, vorzugsweise ausschliesslich,
Polyetherdiol auf Basis von, vorzugsweise ausschliesslich, wenigstens einem Baustein ausgewählt aus folgender Gruppe: Ethylenoxid, Propylenoxid, Tetrahydrofuran oder eine Mischung davon,
und/oder Dimerdiol, vorzugsweise auf Basis dimerisierter Fettsäuren mit 20 - 44 C-Atomen,
und/oder Polyetherdiamin auf Basis von, vorzugsweise ausschliesslich, wenigstens einem Baustein ausgewählt aus folgender Gruppe: Ethylenoxid, Propylenoxid, Tetrahydrofuran, oder eine Mischung davon;
wobei vorzugsweise die Polyamid 12 Hartsegmente eine zahlenmittlere Molmasse im Bereich von 500 bis 10000 g/mol, bevorzugt auf 700 bis 5000 g/mol und besonders bevorzugt auf 750 bis 3000 g/mol aufweisen;
und/oder die Weichsegmente eine zahlenmittlere Molmasse im Bereich vom 200 - 4000 g/mol, bevorzugt im Bereich vom 200 - 3000 g/mol, besonders bevorzugt von 300-2500 g/mol aufweisen;
und/oder wobei der Anteil Polyamid 12 Hartsegment 45-95 Gew.%, vorzugsweise 50 - 80 Gew.% ausmacht, und der Anteil Weichsegmente im Bereich von 5 - 55 Gew.-%, vorzugsweise 20-50 Gew.-%, jeweils bezogen auf 100% der Komponente (A2)
und/oder dass Komponente (A2) vorzugsweise frei von Esterbindungen ist.

5. Polyamid-Formmasse nach einem der vorhergehenden Ansprüche, **dadurch gekennzeichnet, dass**
der Anteil der Komponente (B) innerhalb der Formmasse im Bereich von 10-25 Gew.-%, vorzugsweise im Bereich von 10 - 17 Gew.-% liegt;
und/oder dass die Komponente (B) aufgebaut ist aus 70 - 100 Gew.-% (B1), 0 - 30 Gew.-% (B2), vorzugsweise 80 - 100 Gew.-% (B1), 0 - 20 Gew.-% (B2), insbesondere vorzugsweise 100 Gew.-% (B1), 0 Gew.-% (B2), wobei die Summe von (B1) und (B2) jeweils 100 Gewichtsprozent der Komponente (B) ergibt.

6. Polyamid-Formmasse nach einem der vorhergehenden Ansprüche, **dadurch gekennzeichnet, dass** das wenigstens eine Metallphosphinat der Komponente (B1) ausgewählt ist als Phosphinsäuresalz und/oder Diphosphinsäuresalz, wobei es sich vorzugsweise um ein Phosphinsäuresalz der allgemeinen Formel (I) und/oder Formel (II) und/oder deren Polymere handelt 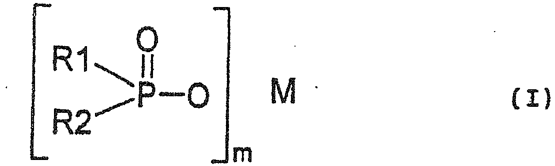 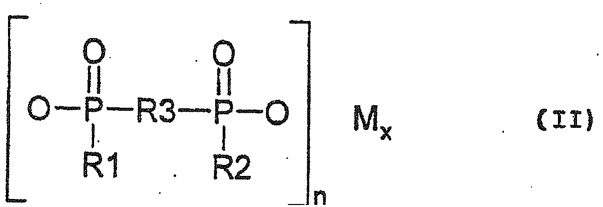 worin
R1, R2 gleich oder verschieden sind und bevorzugt C1-C8-Alkyl, linear oder verzweigt und/oder Aryl sind;
R3 C1-C10-Alkylen, linear oder verzweigt, C6-C10-Arylen, - Alkylarylen oder Arylalkylen sind;
M ein Metallion aus der 2. oder 3. Haupt- oder Nebengruppe des Periodensystems ist; und
m 2 oder 3;
n 1 oder 3;
x 1 oder 2
bedeuten, wobei als Metallion M bevorzugt Al, Ca und Zn eingesetzt ist.

7. Polyamid-Formmasse nach einem der vorhergehenden Ansprüche, **dadurch gekennzeichnet, dass** der Anteil des Weichmachers der Komponente (C) in der Formmasse im Bereich von 5-12 Gew.-% liegt, vorzugsweise im Bereich von 5 - 10 Gew.-%,
und/oder dass der Weichmacher der Komponenten (C) auf Basis von Amiden der Arylsulfonsäuren mit 2 bis 12 C-Atomen, Ester der p-Hydroxybenzoesäure mit 2-20 C-Atomen in der Alkoholkomponente, Phosphonaten oder Phosphaten aufgebaut ist, wobei vorzugsweise die Komponente (C) wenigstens einen der folgenden Weichmacher enthält, bevorzugtermassen aus wenigstens einem der folgenden Weichmacher besteht: p-Hydroxybenzoesäure-octylester p-Hydroxybenzoesäureethylester, p-Hydroxybenzoesäure-i-hexadecylester, p-Hydroxybenzoesäure-2-hexyldecylester, Benzolsulfonsäureamid, Benzolsulfonsäure-N-alkylamide, wobei die Alkylreste insgesamt 1 bis 20 C-Atome tragen, vorzugsweise Benzolsulfonsäure-N-butylamid, Benzolsulfonsäure-N-octylamid, Benzolsulfonsäure-N-ethylhexylamid, Benzolsulfonsäure-N-(2-hydroxypropyl)amid, Benzolsulfonsäure-N-cyclohexylamid, o-Toluolsulfonsäureamid, p-Toluolsulfonsäureamid o- oder p-Toluolsulfonsäure-N-alkylamide, wobei die Alkylgruppen 1 bis 20 C-Atome enthalten, vorzugsweise o-Toluolsulfonsäure-N-ethylamid, p-Toluolsulfonsäure-N-ethylamid, o-Toluolsulfonsäure-N-butylamid und p-Toluolsulfonsäure-N-butylamid oder eine Mischung davon, vorzugsweise eine Mischung aus Benzolsulfonsäure-N-alkylamid und p-Toluolsulfonsäureamid oder ausschliesslich Butylbenzolsulfonamid.

8. Polyamid-Formmasse nach einem der vorhergehenden Ansprüche, **dadurch gekennzeichnet, dass** der Anteil der Komponente (D) in der Formmasse im Bereich von 0-12 Gew.-% liegt, vorzugsweise im Bereich von 4 - 10 Gew.-%, und/oder dass das wenigstens eine Polyolefin auf Basis wenigstens eines oder einer Kombination folgender Bausteine, vorzugsweise als Copolymer, insbesondere vorzugsweise als Terpolymer, aufgebaut ist: Ethylen, Propylen, Butylen, Acrylat, Methacrylat, Acrylsäure, Methacrylsäure, Maleinsäureanhydrid, Glycidyl-Methacrylat, Dien, insbesondere Butadien und/oder Isopren,
und/oder dass das wenigstens eine Polyolefin der Komponente (D) ausgewählt ist aus folgender Gruppe: ein Ethylen-Propylen-Kautschuk (EPM, EPR), Ethylen-Propylen-Dien-Kautschuk (EPDM), styrolhaltiges Elastomer, insbesondere SEBS, SBS, SEPS, Acrylatkautschuk, Nitril-Kautschuke (NBR, H-NBR), Siliconkautschuk;
und/oder dass das wenigstens eine Polyolefin der Komponente (D) funktionalisiert ist, vorzugsweise mit Maleinsäureanhydrid und/oder Glycidyl-Methacrylat, vorzugsweise mit einem Pfropfgrad im Bereich von 0.05-10 %, und/oder dass es sich um ein Polyolefin-Ionomeres handelt.

9. Polyamid-Formmasse nach einem der vorhergehenden Ansprüche, **dadurch gekennzeichnet, dass** der Anteil der Komponente (E) in der Formmasse im Bereich von 0-8 Gew.-% liegt, vorzugsweise im Bereich von 1 - 5 Gew.-%, wobei vorzugsweise Komponente (E) frei von partikulären Füllstoffen ist.

10. Polyamid-Formmasse nach einem der vorhergehenden Ansprüche, **dadurch gekennzeichnet, dass** sie kein aromatisches und/oder teilaromatisches Polyamid aufweist, und/oder dass sie kein Melaminpolyphosphat und/oder Melamincyanurat aufweist.

11. Polyamid-Formmasse nach einem der vorhergehenden Ansprüche, **dadurch gekennzeichnet, dass** sie besteht aus:
(A) 60-79 Gew.-% einer Polyamidmatrix bestehend aus:
(A1) 80 - 92 Gew.-% Polyamid 12;
(A2) 8 - 20 Gew.-% Polyamid-Elastomer aus Polyamid 12 Hartsegmenten und Weichsegmenten auf Basis von, vorzugsweise ausschliesslich, Polyetherdiol aus wenigstens einem Baustein ausgewählt aus folgender Gruppe: Ethylenoxid, Propylenoxid, Tetrahydrofuran; wobei das Polyamid-Elastomer bevorzugt frei von Esterbindungen ist;
wobei die Summe von (A1) und (A2) 100 Gewichtsprozent der Komponente (A) ergibt;
(B) 8-25 Gew.-% Flammschutzmittel, bestehend aus wenigstens einem Metallphosphinat ausgewählt als Phosphinsäuresalz und/oder Diphosphinsäuresalz;
(C) 5-10 Gew.-% Weichmacher ausgewählt als N-Butylbenzolsulfonamid;
(D) 8-12 Gew.-% Polyolefin ausgewählt als Copolymer, aufgebaut aus wenigstens einem oder einer Kombination folgender Bausteine: Ethylen, Propylen, Butylen, Acrylat, Methacrylat, Acrylsäure, Methacrylsäure vorzugsweise funktionalisiert mit Maleinsäureanhydrid und/oder als Polyolefin-Ionomeres;
(E) 0-5 Gew.-% Additive unter Ausschluss von partikulären Füllstoffen;
wobei die Summe aus (C) und (D) 13 bis 20 Gew.-% bezogen auf die gesamte Formmasse ist, und
wobei die Summe (A) bis (E) 100 Gew.-% ergibt.

12. Verfahren zur Herstellung einer Polyamid-Formmasse nach einem der vorhergehenden Ansprüche, **dadurch gekennzeichnet, dass** die Komponenten (A1) und gegebenenfalls (A2) gemischt werden und gleichzeitig oder anschliessend die Komponenten (B) - (E) eingemischt werden, wobei die Mischung bevorzugt in einem Temperaturbereich von 260 bis 300°C, insbesondere im Bereich von 270-290°C erfolgt und der Weichmacher (C) entweder über eine Flüssigdosierung separat oder vorgemischt mit Komponente A über eine Granulatdosierung in die Mischung eingebracht wird, und das Flammschutzmittel (B) bevorzugt über eine separate Pulverdosierung in die bereits als Schmelze vorliegende übrige Mischung eingemischt wird.

13. Bauteil aus einer Polyamid-Formmasse nach einem der vorhergehenden Ansprüche 1 - 11, vorzugsweise hergestellt in einem Verfahren nach Anspruch 12, insbesondere für brandgeschützte Anwendungen im Bahnbereich, vorzugsweise als Beschichtung, Abdeckung, Folie, Profil, Rohr, Wellrohr, Hohlkörper, Dichtung, Verkleidung, Halterung, Gehäuse, Ummantelung, Elektro- und Elektronikbauteile wie vorzugsweise Stecker und Lüfter, vorzugsweise zugelassen nach DIN EN 45545.

14. Verfahren zur Herstellung eines Bauteils nach Anspruch 13, wobei vorzugsweise eine Polyamid-Formmasse nach einem der Ansprüche 1-11 in einem Extrusions- oder Extrusionsblasverfahren, einem Spritzgussverfahren oder einem Hinterspritzen zum Bauteil geformt wird.

15. Verwendung einer Polyamid-Formmasse nach einem der vorhergehenden Ansprüche 1 - 11, vorzugsweise hergestellt in einem Verfahren nach Anspruch 12, zur Herstellung von Bauteilen nach Anspruch 13.

## Claims

1. Polyamide moulding composition consisting of:
(A) from 50 to 90% by weight of polyamide matrix consisting of:
(A1) from 15 to 100% by weight of polyamide 12;
(A2) from 0 to 85% by weight of polyamide elastomer based on polyamide 12;
where the entirety of (A1) and (A2) provides 100% by weight of component (A);
(B) from 7 to 28% by weight of flame retardant consisting of:
(B1) from 60 to 100% by weight of at least one metal phosphinate;
(B2) from 0 to 40% by weight of at least one nitrogen-containing synergist and/or at least one nitrogen- and phosphorus-containing flame retardant;
where the entirety of (B1) and (B2) provides 100% by weight of component (B);
(C) from 3 to 15% by weight of plasticizer;
(D) from 0 to 15% by weight polyolefin;
(E) from 0 to 10% by weight of additives and/or particulate fillers;
where component (E) is free from fibrous reinforcing materials,
where the entirety of (C) and (D) is from 3 to 20% by weight, based on the entire moulding composition,
and
where the entirety of (A) to (E) provides 100% by weight.

2. Polyamide moulding composition according to Claim 1, **characterized in that** the polyamide matrix (A) consists of:
(A1) from 20 to 100% by weight, preferably from 50 to 100% by weight, particularly preferably from 80 to 95% by weight, of polyamide 12;
(A2) from 0 to 80% by weight, preferably from 0 to 50% by weight, particularly preferably from 5 to 20% by weight, of polyamide elastomer based on polyamide 12,
where the entirety of (A1) and (A2) provides 100% by weight of component (A).

3. Polyamide moulding composition according to any of the preceding claims, **characterized in that** the polyamide 12 of component (A1) is a polyamide 12 with solution viscosity in the range ηᵣₑₗ = from 1.5 to 2.8, preferably in the range ηᵣₑₗ = from 1.5 to 2.3 (measured in each case at 20°C on a solution of 0.5 g of polymer in 100 ml of m-kresol).

4. Polyamide moulding composition according to any of the preceding claims, **characterized in that** the polyamide elastomer of component (A2) has hard segments based on polyamide 12, and
soft segments based, preferably exclusively, on
polyether diol based, preferably exclusively, on at least one unit selected from the following group: ethylene oxide, propylene oxide, tetrahydrofuran and mixtures thereof,
and/or dimer diol, preferably based on dimerized fatty acids having from 20 to 44 C atoms,
and/or polyetherdiamine based, preferably exclusively, on at least one unit selected from the following group: ethylene oxide, propylene oxide, tetrahydrofuran and mixtures thereof;
where preferably the number-average molar mass of the rigid polyamide 12 segments is in the range from 500 to 10 000 g/mol, with preference from 700 to 5000 g/mol and with particular preference from 750 to 3000 g/mol;
and/or the number-average molar mass of the soft segments is in the range from 200 to 4000 g/mol, with preference in the range from 200 to 3000 g/mol, with particular preference from 300 to 2500 g/mol;
and/or where the rigid polyamide 12 segment contributes from 45 to 95% by weight, preferably from 50 to 80% by weight, and the soft segments contribute from 5 to 55% by weight, preferably from 20 to 50% by weight, based in each case on 100% of component (A2)
and/or that component (A2) is preferably free from ester bonds.

5. Polyamide moulding composition according to any of the preceding claims, **characterized in that**
the content of component (B) within the moulding composition is in the range from 10 to 25% by weight, preferably in the range from 10 to 17% by weight; and/or that component (B) is composed of from 70 to 100% by weight of (B1), from 0 to 30% by weight of (B2), preferably from 80 to 100% by weight of (B1), from 0 to 20% by weight of (B2), particularly preferably 100% by weight of (B1), 0% by weight of (B2), where the entirety of (B1) and (B2) in each case provides 100% by weight of component (B).

6. Polyamide moulding composition according to any of the preceding claims, **characterized in that** the at least one metal phosphinate of component (B1) is selected as phosphinic salt and/or diphosphinic salt, preferably a phosphonic salt of the general formula (I) and/or formula (II) and/or polymers thereof 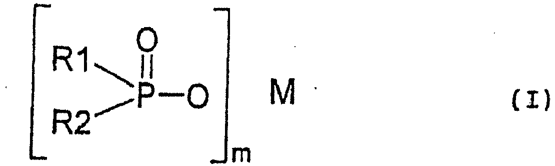 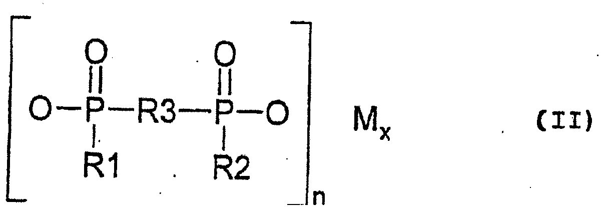 in which
R1, R2 are identical or different and preferably C1-C8-alkyl, linear or branched and/or aryl;
R3 are C1-C10-alkylene, linear or branched, C6-C10-arylene, -alkylarylene or arylalkylene;
M is a metal ion from the 2nd or 3rd main or transition group of the periodic table of the elements; and
m is 2 or 3;
n is 1 or 3;
x is 1 or 2,
where it is preferable to use Al, Ca and Zn as metal ion M.

7. Polyamide moulding composition according to any of the preceding claims, **characterized in that** the content of the plasticizer of component (C) in the moulding composition is in the range from 5 to 12% by weight, preferably in the range from 5 to 10% by weight,
and/or that the plasticizer of component (C) is based on amides of the arylsulfonic acids having from 2 to 12 C atoms, on esters of p-hydroxybenzoic acid having from 2 to 20 C atoms in the alcohol component, or on phosphonates or phosphates, where component (C) preferably comprises at least one of the following plasticizers, with preference consists of at least one of the following plastizicers: octyl p-hydroxybenzoate, ethyl p-hydroxybenzoate, isohexadecyl p-hydroxybenzoate, 2-hexyldecyl p-hydroxybenzoate, benzenesulfonomide, N-alkylbenzenesulfonamides, where the alkyl moieties bear a total of from 1 to 20 C atoms, preferably N-butylbenzenesulfonamide, N-octylbenzenesulfonamide, N-ethylhexylbenzenesulfonamide, N-(2-hydroxypropyl)benzenesulfonamide, N-cyclohexylbenzenesulfonamide, o-toluenesulfonamide, p-toluenesulfonamide, N-alkyl-o- or -p-toluenesulfonamides, where the alkyl groups comprise from 1 to 20 C atoms, preferably N-ethyl-o-toluenesulfonamide, N-ethyl-p-toluenesulfonamide, N-butyl-o-toluenesulfonamide or N-butyl-p-toluenesulfonamide or a mixture thereof, preferably a mixture of N-alkylbenzenesulfonamide and p-toluenesulfonamide or exclusively butylbenzenesulfonamide.

8. Polyamide moulding composition according to any of the preceding claims, **characterized in that** the content of component (D) in the moulding composition is in the range from 0 to 12% by weight, preferably in the range from 4 to 10% by weight,
and/or that the at least one polyolefin is based on at least one of, or a combination of, the following units, preferably as copolymer, particularly preferably as terpolymer: ethylene, propylene, butylene, acrylate, methacrylate, acrylic acid, methacrylic acid, maleic anhydride, glycidyl methacrylate, diene, in particular butadiene and/or isoprene,
and/or that the at least one polyolefin of component (D) is selected from the following group: ethylene-propylene rubber (EPM, EPR), ethylene-propylene-diene rubber (EPDM), styrene-containing elastomer, in particular SEBS, SBS, SEPS, acrylate rubber, nitrile rubbers (NBR, HNBR), silicone rubber;
and/or that the at least one polyolefin of component (D) has been functionalized, preferably with maleic anhydride and/or glycidyl methacrylate, preferably with a degree of grafting in the range from 0.05 to 10%, and/or that it is a polyolefin ionomer.

9. Polyamide moulding composition according to any of the preceding claims, **characterized in that** the content of component (E) in the moulding composition is in the range from 0 to 8% by weight, preferably in the range from 1 to 5% by weight, where component (E) is preferably free from particulate fillers.

10. Polyamide moulding composition according to any of the preceding claims, **characterized in that** it comprises no aromatic and/or semi-aromatic polyamide, and/or that it comprises no melamine polyphosphate and/or melamine cyanurate.

11. Polyamide moulding composition according to any of the preceding claims, **characterized in that** it consists of:
(A) from 60 to 79% by weight of a polyamide matrix consisting:
(A1) from 80 to 92% by weight of polyamide 12;
(A2) from 8 to 20% by weight of polyamide elastomer made of rigid polyamide 12 segments and of soft segments based, preferably exclusively, on polyetherdiol made of at least one unit selected from the following group: ethylene oxide, propylene oxide, tetrahydrofuran; where the polyamide elastomer is preferably free from ester bonds;
where the entirety of (A1) and (A2) provides 100% by weight of component (A);
(B) from 8 to 25% by weight of flame retardant consisting of at least one metal phosphinate selected as phosphinic salt and/or diphosphinic salt;
(C) from 5 to 10% by weight of plasticizer selected as N-butylbenzenesulfonamide;
(D) from 8 to 12% by weight of polyolefin selected as copolymer composed of at least one of, or a combination of, the following units: ethylene, propylene, butylene, acrylate, methacrylate, acrylic acid, methacrylic acid preferably functionalized with maleic anhydride and/or as polyolefin ionomer;
(E) from 0 to 5% by weight of additives with exclusion of particulate fillers; where the entirety of (C) and (D) is from 13 to 20% by weight, based on the entire moulding composition, and
where the entirety of (A) to (E) provides 100% by weight.

12. Process for the production of a polyamide moulding composition according to any of the preceding claims, **characterized in that** components (A1) and optionally (A2) are mixed and simultaneously or subsequently components (B) to (E) are incorporated, where the mixing preferably takes place in the temperature range from 260 to 300°C, in particular in the range from 270 to 290°C and the plasticizer (C) is introduced into the mixture either separately by way of a liquid metering system or after premixing with component (A) by way of a granulate metering system, and the flame retardant (B) is preferably incorporated by way of separate powder metering system into the remainder of the mixture which already takes the form of a melt.

13. Component made of a polyamide moulding composition according to any of the preceding Claims 1 to 11, preferably produced in a process according to Claim 12, in particular for fire-protected applications in the railway sector, preferably as coating, covering, film, profile, corrugated or non-corrugated pipe, hollow body, gasket, cladding, holder, housing, sheathing, or electrical or electronic component, preferably plugged or fan, preferably approved in accordance with DIN EN 45545.

14. Process for the production of a component according to Claim 13, where a polyamide moulding composition according to any of Claims 1 to 11 in an extrusion process or extrusion blow moulding process, an injection-moulding process or an in-mould-coating process to give the component.

15. Use of a polyamide moulding composition according to any of the preceding Claims 1 to 11, preferably produced in a process according to Claim 12, for the production of components according to Claim 13.

## Revendications

1. Matériau de moulage polyamide, constitué par :
(A) 50 à 90 % en poids d'une matrice de polyamide, constituée par :
(A1) 15 à 100 % en poids de polyamide 12 ;
(A2) 0 à 85 % en poids d'un élastomère de polyamide à base de polyamide 12 ;
la somme de (A1) et (A2) étant de 100 pour cent en poids du composant (A) ;
(B) 7 à 28 % en poids d'agents ignifuges, constitués par :
(B1) 60 à 100 % en poids d'au moins un phosphinate de métal ;
(B2) 0 à 40 % en poids d'au moins un synergiste contenant de l'azote et/ou d'au moins un agent ignifuge contenant de l'azote et du phosphore ;
la somme de (B1) et (B2) étant de 100 pour cent en poids du composant (B) ;
(C) 3 à 15 % en poids de plastifiants ;
(D) 0 à 15 % en poids d'une polyoléfine ;
(E) 0 à 10 % en poids d'additifs et/ou de charges particulaires ;
le composant (E) étant exempt de matières renforçantes fibreuses,
la somme de (C) et (D) étant de 3 à 20 % en poids, par rapport à l'ensemble du matériau de moulage,
et
la somme de (A) à (E) étant de 100 % en poids.

2. Matériau de moulage polyamide selon la revendication 1, **caractérisé en ce que** la matrice de polyamide (A) est constituée par :
(A1) 20 à 100 % en poids, de préférence 50 à 100 % en poids, de manière particulièrement préférée 80 à 95 % en poids, de polyamide 12 ;
(A2) 0 à 80 % en poids, de préférence 0 à 50 % en poids, de manière particulièrement préférée 5 à 20 % en poids, d'un élastomère de polyamide à base de polyamide 12,
la somme de (A1) et (A2) étant de 100 pour cent en poids du composant (A).

3. Matériau de moulage polyamide selon l'une quelconque des revendications précédentes, **caractérisé en ce que** le polyamide 12 du composant (A1) est un polyamide 12 ayant une viscosité en solution dans la plage de ηᵣₑₗ = 1,5 à 2,8, de préférence dans la plage de ηᵣₑₗ = 1,5 à 2,3 (à chaque fois mesurée à 20 °C sur une solution de 0,5 g de polymère dissous dans 100 ml de m-crésol).

4. Matériau de moulage polyamide selon l'une quelconque des revendications précédentes, **caractérisé en ce que** l'élastomère de polyamide du composant (A2) comprend
des segments durs à base de polyamide 12 et
des segments mous à base, de préférence exclusivement,
d'un polyéther-diol à base, de préférence exclusivement, d'au moins un constituant choisi dans le groupe suivant : l'oxyde d'éthylène, l'oxyde de propylène, le tétrahydrofurane ou un mélange de ceux-ci,
et/ou d'un diol dimère, de préférence à base d'acides gras dimérisés de 20 à 44 atomes C,
et/ou d'une polyéther-diamine à base, de préférence exclusivement, d'au moins un constituant choisi dans le groupe suivant : l'oxyde d'éthylène, l'oxyde de propylène, le tétrahydrofurane ou un mélange de ceux-ci ;
de préférence, les segments durs du polyamide 12 présentant une masse molaire moyenne en nombre dans la plage allant de 500 à 10 000 g/mol, de préférence de 700 à 5 000 g/mol et de manière particulièrement préférée de 750 à 3 000 g/mol ;
et/ou les segments mous présentant une masse molaire moyenne en nombre dans la plage allant de 200 à 4 000 g/mol, de préférence dans la plage allant de 200 à 3 000 g/mol, de manière particulièrement préférée de 300 à 2 500 g/mol ;
et/ou la proportion de segments durs du polyamide 12 étant de 45 à 95 % en poids, de préférence de 50 à 80 % en poids, et la proportion de segments mous étant dans la plage allant de 5 à 55 % en poids, de préférence de 20 à 50 % en poids, à chaque fois par rapport à 100 % du composant (A2),
et/ou **en ce que** le composant (A2) est de préférence exempt de liaisons ester.

5. Matériau de moulage polyamide selon l'une quelconque des revendications précédentes, **caractérisé en ce que**
la proportion du composant (B) dans le matériau de moulage se situe dans la plage allant de 10 à 25 % en poids, de préférence dans la plage allant de 10 à 17 % en poids ;
et/ou **en ce que** le composant (B) est formé par 70 à 100 % en poids de (B1), 0 à 30 % en poids de (B2), de préférence 80 à 100 % en poids de (B1), 0 à 20 % en poids de (B2), de manière particulièrement préférée 100 % en poids de (B1), 0 % en poids de (B2), la somme de (B1) et (B2) étant à chaque fois de 100 pour cent en poids du composant (B).

6. Matériau de moulage polyamide selon l'une quelconque des revendications précédentes, **caractérisé en ce que** ledit au moins un phosphinate de métal du composant (B1) est choisi en tant que sel de l'acide phosphinique et/ou sel de l'acide diphosphinique, celui-ci étant de préférence un sel de l'acide phosphinique de formule générale (I) et/ou de formule générale (II) et/ou leurs polymères 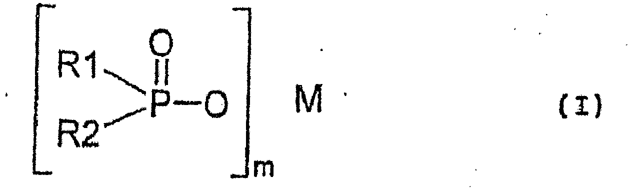 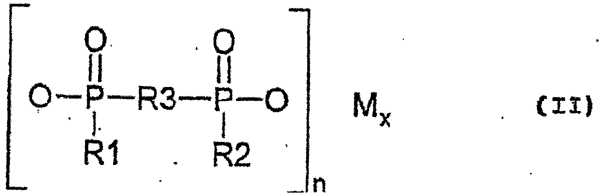 dans lesquelles
R1, R2 sont identiques ou différents, et signifient de préférence alkyle en C1-C8, linéaire ou ramifié, et/ou aryle ;
R3 signifie alkylène en C1-C10, linéaire ou ramifié, arylène en C6-C10, alkylarylène en C6-C10 ou arylalkylène ;
M signifie un ion métallique du 2^{e} ou 3^{e} groupe principal ou de transition du tableau périodique ; et
m signifie 2 ou 3 ;
n signifie 1 ou 3 ;
x signifie 1 ou 2,
Al, Ca et Zn étant utilisés de préférence en tant qu'ion métallique M.

7. Matériau de moulage polyamide selon l'une quelconque des revendications précédentes, **caractérisé en ce que** la proportion du plastifiant du composant (C) dans le matériau de moulage se situe dans la plage allant de 5 à 12 % en poids, de préférence dans la plage allant de 5 à 10 % en poids,
et/ou **en ce que** le plastifiant du composant (C) est formé à base d'amides d'acides arylsulfoniques de 2 à 12 atomes C, d'esters de l'acide p-hydroxybenzoïque de 2 à 20 atomes C dans le composant alcool, de phosphonates ou de phosphates, le composant (C) contenant de préférence au moins un des plastifiants suivants, de préférence étant constitué par au moins un des plastifiants suivants : l'ester octylique de l'acide p-hydroxybenzoïque, l'ester éthylique de l'acide p-hydroxybenzoïque, l'ester i-hexadécylique de l'acide p-hydroxybenzoïque, l'ester 2-hexyldécylique de l'acide p-hydroxybenzoïque, l'amide de l'acide benzène-sulfonique, les N-alkylamides de l'acide benzène-sulfonique, les radicaux alkyle portant au total 1 à 20 atomes C, de préférence le N-butylamide de l'acide benzène-sulfonique, le N-octylamide de l'acide benzène-sulfonique, le N-éthylhexylamide de l'acide benzène-sulfonique, le N-(2-hydroxypropyl)amide de l'acide benzène-sulfonique, le N-cyclohexylamide de l'acide benzène-sulfonique, l'amide de l'acide o-toluène-sulfonique, l'amide de l'acide p-toluène-sulfonique, les N-alkylamides de l'acide o- ou p-toluène-sulfonique, les groupes alkyle contenant 1 à 20 atomes C, de préférence le N-éthylamide de l'acide o-toluène-sulfonique, le N-éthylamide de l'acide p-toluène-sulfonique, le N-butylamide de l'acide o-toluène-sulfonique et le N-butylamide de l'acide p-toluène-sulfonique ou un mélange de ceux-ci, de préférence un mélange de N-alkylamide de l'acide benzène-sulfonique et de l'amide de l'acide p-toluène-sulfonique ou exclusivement le butylbenzène-sulfonamide.

8. Matériau de moulage polyamide selon l'une quelconque des revendications précédentes, **caractérisé en ce que** la proportion du composant (D) dans le matériau de moulage se situe dans la plage allant de 0
à 12 % en poids, de préférence dans la plage allant de 4 à 10 % en poids,
et/ou **en ce que** ladite au moins une polyoléfine est formée à base d'au moins un ou d'une combinaison des constituants suivants, de préférence en tant que copolymère, de manière particulièrement préférée en tant que terpolymères : l'éthylène, le propylène, le butylène, l'acrylate, le méthacrylate, l'acide acrylique, l'acide méthacrylique, l'anhydride de l'acide maléique, le méthacrylate de glycidyle, un diène, notamment le butadiène et/ou l'isoprène,
et/ou **en ce que** ladite au moins une polyoléfine du composant (D) est choisie dans le groupe suivant : un caoutchouc d'éthylène-propylène (EPM, EPR), un caoutchouc d'éthylène-propylène-diène (EPDM), un élastomère contenant du styrène, notamment le SEBS, le SBS, le SEPS, un caoutchouc d'acrylate, les caoutchoucs de nitrile (NBR, H-NBR), le caoutchouc de silicone ; et/ou **en ce que** ladite au moins une polyoléfine du composant (D) est fonctionnalisée, de préférence avec de l'anhydride de l'acide maléique et/ou du méthacrylate de glycidyle, de préférence avec un degré de greffage dans la plage allant de 0,05 à 10 %,
et/ou **en ce qu'**il s'agit d'un ionomère de polyoléfine.

9. Matériau de moulage polyamide selon l'une quelconque des revendications précédentes, **caractérisé en ce que** la proportion du composant (E) dans le matériau de moulage se situe dans la plage allant de 0 à 8 % en poids, de préférence dans la plage allant de 1 à 5 % en poids, le composant (E) étant de préférence exempt de charges particulaires.

10. Matériau de moulage polyamide selon l'une quelconque des revendications précédentes, **caractérisé en ce qu'**il ne comprend pas de polyamide aromatique et/ou partiellement aromatique et/ou **en ce qu'**il ne comprend pas de polyphosphate de mélamine et/ou de cyanurate de mélamine.

11. Matériau de moulage polyamide selon l'une quelconque des revendications précédentes, **caractérisé en ce qu'**il est constitué par :
(A) 60 à 79 % en poids d'une matrice de polyamide, constituée par :
(A1) 80 à 92 % en poids de polyamide 12 ;
(A2) 8 à 20 % en poids d'un élastomère de polyamide constitué de segments durs de polyamide 12 et de segments mous à base, de préférence exclusivement, d'un polyéther-diol à base d'au moins un constituant choisi dans le groupe suivant : l'oxyde d'éthylène, l'oxyde de propylène, le tétrahydrofurane ; l'élastomère de polyamide étant de préférence exempt de liaisons ester ;
la somme de (A1) et (A2) étant de 100 pour cent en poids du composant (A) ;
(B) 8 à 25 % en poids d'agents ignifuges, constitués par au moins un phosphinate de métal choisi en tant que sel de l'acide phosphinique et/ou sel de l'acide diphosphinique ;
(C) 5 à 10 % en poids d'un plastifiant choisi en tant que N-butylbenzène-sulfonamide ;
(D) 8 à 12 % en poids d'une polyoléfine choisie en tant que copolymère, formée à base d'au moins un ou d'une combinaison des constituants suivants : l'éthylène, le propylène, le butylène, l'acrylate, le méthacrylate, l'acide acrylique, l'acide méthacrylique, de préférence fonctionnalisé avec de l'anhydride de l'acide maléique et/ou en tant qu'ionomère de polyoléfine ;
(E) 0 à 5 % en poids d'additifs à l'exclusion des charges particulaires ;
la somme de (C) et (D) étant de 13 à 20 % en poids, par rapport à l'ensemble du matériau de moulage, et
la somme de (A) à (E) étant de 100 % en poids.

12. Procédé de fabrication d'un matériau de moulage polyamide selon l'une quelconque des revendications précédentes, **caractérisé en ce que** les composants (A1) et éventuellement (A2) sont mélangés, et les composants (B) à (E) sont incorporés simultanément ou ultérieurement, le mélange ayant de préférence lieu dans une plage de température allant de 260 à 300 °C, notamment dans la plage allant de 270 à 290 °C, et le plastifiant (C) étant introduit dans le mélange par un dosage de liquide séparément ou pré-mélangé avec le composant A par un dosage de granulé, et l'agent ignifuge (B) étant de préférence incorporé par un dosage de poudre séparé dans le mélange restant déjà présent sous la forme d'une masse fondue.

13. Composant en un matériau de moulage polyamide selon l'une quelconque des revendications 1 à 11 précédentes, de préférence fabriqué par un procédé selon la revendication 12, notamment pour des applications de protection contre l'incendie dans le domaine ferroviaire, de préférence en tant que revêtement, couverture, feuille, profilé, tube, tube cannelé, corps creux, joint, habillage, fixation, boîtier, enrobage, composants électriques et électroniques tels que de préférence fiches et ventilateurs, de préférence conformes à DIN EN 45545.

14. Procédé de fabrication d'un composant selon la revendication 13, selon lequel un matériau de moulage polyamide selon l'une quelconque des revendications 1 à 11 est de préférence mis sous la forme du composant par un procédé d'extrusion ou d'extrusion-soufflage, un procédé de moulage par injection ou une contre-injection.

15. Utilisation d'un matériau de moulage polyamide selon l'une quelconque des revendications 1 à 11 précédentes, de préférence fabriqué par un procédé selon la revendication 12, pour la fabrication de composants selon la revendication 13.
